# EUROPEAN PATENT APPLICATION

(11) **EP 3 720 125 A1**
(43) Date of publication of application: **07.10.2020**
(21) Application number: 19166876.3
(22) Date of filing: 02.04.2019
(51) Int. Cl.: H04N 13/302, H04N 13/31, H04N 13/368

(54) **AUTOSTEREOSCOPIC MULTI-VIEWER DISPLAY DEVICE**

(71) Applicant: SeeFront GmbH, 20097 Hamburg (DE)
(72) Inventor: Neumann, Sabine, 20097 Hamburg (DE); Großmann, Christoph, 20097 Hamburg (DE)
(74) Representative: Ter Meer Steinmeister & Partner

(57) **Abstract**

An autostereoscopic display device comprising:
- a monitor having a parallax barrier ;
- a tracking system arranged to track a viewing position (U) of a primary viewer (44); and
- a computer configured to control the monitor to display a stereoscopic image that is optimized for the viewing position (U) of the primary viewer (44),
wherein the computer is configured for calculating, on the basis of data provided by the tracking system, user assistance information (24) for a secondary viewer (46) and for outputting this information, said user assistance information (24) proposing actions to be taken by the secondary viewer (46) in order to see a 3D-image on the monitor.

## Description

The invention relates to an autostereoscopic display device comprising:
- a monitor having a parallax barrier;
- a tracking system arranged to track a viewing position of a primary viewer; and
- a computer configured to control the monitor to display a stereoscopic image that is optimized for the viewing position of the primary viewer.

An example of a display device of this type has been described in WO 2016/107892 A1.

The computer can be realized as a personal computer with graphics card or any other electronic device like an FPGA or an ASIC.

Typically, the monitor has a screen comprising an array of light-emitting pixels that are individually controllable and are arranged in lines and columns. In order to create an illusion of a 3D image, the screen displays two interleaved images. One of these images comprises a collection of interspaced pixel columns or groups of adjacent pixel columns which shall be visible only for a left eye of the primary viewer and constitute a left channel of the 3D image, whereas the other of the two interleaved images comprises the remaining pixel columns which constitute a right channel and shall be visible only for the right eye of the primary viewer. The parallax barrier has the purpose to obscure the pixel columns of the left channel for the right eye and the pixel columns of the right channel for the left eye. For example, the parallax barrier may be formed by an array of opaque vertical stripes disposed at a certain distance in front of the screen surface. As an alternative, the parallax barrier may be formed by a lenticular lens comprising an array of cylindrical lenses arranged to deflect the light from pixel columns of the left channel towards the left eye of the viewer and light from the pixel columns of the right channel towards the right eye of the viewer. It should be observed that the stripes or cylindrical lenses may be - and in most cases actually will be slightly slanted relative to the vertical, so that the pixel columns will also be slanted.

In order to determine which pixel columns belong to the left channel and which belong to the right channel, a so-called channel mask may be defined which specifies the boundaries between the left channel columns and the right channel columns. The position and shape of the channel mask depends upon the viewing position of the primary viewer. When the distance between the screen surface and the viewing position changes, the channel mask has to be resized. When the viewing position relative to the screen changes in horizontal direction, the channel mask has to be shifted in horizontal direction.

The tracking system has the purpose to determine the current viewing position of the primary viewer, so that the channel mask may be adapted accordingly.

By configuring the channel mask and, accordingly, the interleaved images to be displayed on the screen, it is possible to optimize the 3D impression for a single viewer, i.e. the primary viewer. If one or more further viewers (secondary viewers) are present, who necessarily have to look at the screen from a different viewing position than the primary viewer, the secondary viewers may still see a 3D image, though possibly with slightly degraded quality, provided that their viewing positions fulfil certain conditions.

It is an object of the invention to provide an autostereoscopic display device which is particularly suited for a multi-viewer scenario.

In order to achieve this object, in the device according to the invention, the computer is configured for calculating, on the basis of data provided by the tracking system, user assistance information for a secondary viewer and for outputting this information, said user assistance information proposing actions to be taken by the secondary viewer in order to see a 3D image on the monitor.

In this way, the secondary viewer - or a plurality of secondary viewers - are instructed and guided through actions that will enable them to see a 3D image at all or to see a 3D image in better quality.

More specific optional features of the invention are indicated in the dependent claims.

The user assistance information may be output in the form of spoken or written text or graphical symbols. In the case of written text or graphical symbols, the information may be displayed on the screen of the monitor or on a separate display device. If it is displayed on the monitor screen, it may be displayed in a specific display section which does not necessarily have to have a parallax barrier.

In one embodiment, the user assistance information may comprise instructions prompting the secondary viewers to move their heads to suitable viewing positions or at least into suitable viewing zones.

Since the computer calculates the channel mask on the basis of the information received from the tracking system, information on the locations of the viewing zones is available in the computer and can be used for controlling the display section. Then, if a viewer watches the screen from a viewing position that is not within one of the viewing zones, the display section will prompt that viewer to move her head in a direction towards a viewing zone from which a high quality 3D image can be seen. The displayed information may comprise symbols such as arrows and the like which show the viewers how to move their heads.

In one embodiment, the tracking system may be configured to track also the current viewing positions of not only the primary viewer but also of any secondary viewers that may be present in front of the monitor. In case of more than one secondary viewer, specific user assistance information may be displayed for each of the identified secondary viewers.

For example, the display section may take the form of a bar, e.g. at the top edge of the monitor screen, showing a position mark for each of the identified secondary viewers, such that the positions of the marks on the bar indicate the present positions of the viewers. Then, each position mark may be accompanied by an instruction or symbol such as an arrow for guiding the viewer that is associated with that mark to an optimal viewing position. The marks for different viewers may be distinguished by color, for example.

The tracking system may also be configured to automatically detect the presence of potential viewers in front of the monitor. Then, if the tracking system detects two or more potential viewers, it may be configured to automatically identify one of the viewers as the primary viewer, for example on the basis of heuristic rules such as "the primary viewer is the viewer who was the first to approach the monitor", "the primary viewer is the viewer with the smallest distance to the monitor" or "the primary viewer is the viewer whose lateral position is closest to the center of the screen". Then, the image on the screen will automatically be optimized for the identified primary viewer, and the display section will be controlled to guide each of the secondary viewers to one of the available other viewing zones, preferably the one for which the highest image quality can be obtained (in general the one that is closest to the center of the screen).

The tracking system may also be configured to automatically re-assign the attribute "primary viewer" to another viewer if the primary viewer who was identified first turns away from the screen or leaves the area in front of the monitor.

In one embodiment, the display section may be constituted by a portion of the screen that is located behind the parallax barrier, and the pixels on the screen that constitute the display section may be controlled such that the information that is visible for a viewer in a certain viewing position is dependent upon that viewing position. Then, for example, if the current viewing position of a secondary viewer is offset to the left from a center of an available viewing zone, the display section of the screen may be controlled such that an arrow pointing to the right is visible from that viewing position. In contrast, from a viewing position that is offset to the right from the center of the viewing zone, an arrow pointing to the left will be visible. In this embodiment, useful user assistance information can be provided even if the tracking system is not capable of tracking more than one viewer.

In another embodiment, the computer may be configured to show 3D images for different viewers in separate windows, which will be designated as "viewports" hereinafter. Then, the user assistance information will comprise information indicating which viewport is assigned to which viewer.

Of course, the embodiments described above may be combined with each other, resulting, for example, in a system providing a number of viewports at least one of which is assigned to two or more viewers, i.e. a primary viewer and a number of secondary viewers.

Embodiment examples will now be described in conjunction with the drawings, wherein:
- Fig. 1: is a block diagram of an autostereoscopic display device according to the invention;
- Fig. 2: is a cross-sectional view of a lens array and a channel mask defining a plurality of viewing zones;
- Fig. 3: is a schematic view of a display section on a monitor screen of the display device;
- Fig. 4: is a cross-sectional view of a lens array covering a display section of a monitor screen according to another embodiment;
- Fig. 5: is a perspective view of a monitor and two viewers;
- Fig. 6: shows the same situation as Fig. 5, but in a view from above;
- Fig. 7: shows a monitor screen on which two viewports are visible; and
- Fig. 8: shows a layout with several 3D and 2D viewports.

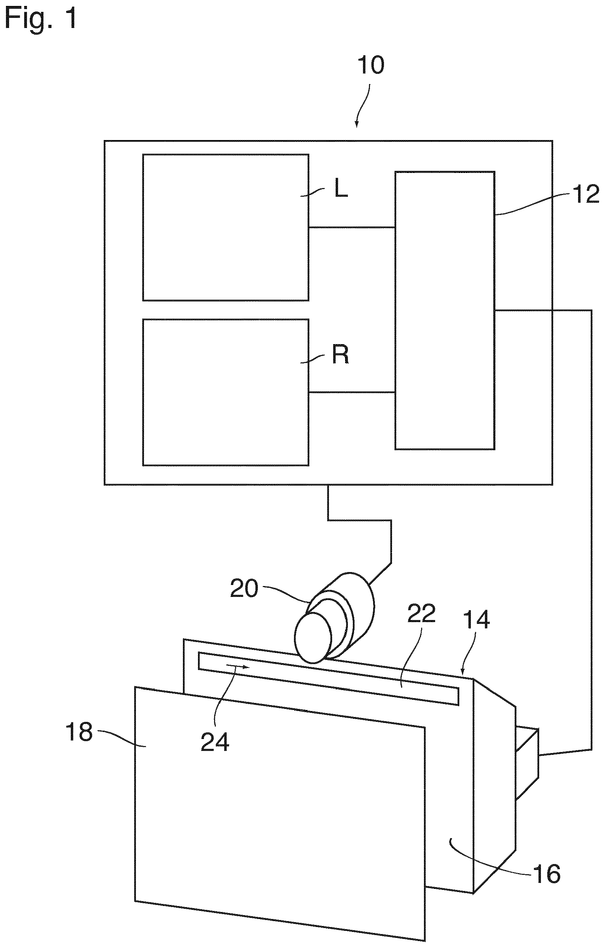

Fig. 1 shows an autostereoscopic display device comprising a computer 10, e. g. a personal computer, including a graphics card 12 which drives a monitor 14 so as to display images on a screen 16 of the monitor. A parallax barrier in the form of lens array 18 is disposed in front of the screen 16, and a video camera forming part of a tracking system 20 is attached to the monitor 14 and communicates with the computer 10.

The graphics card 12 has access to two textures L and R that are stored in a memory of the computer 10. The texture L stores image information of a left view, i.e. image information that is to be displayed to the left eye of a viewer (not shown) who looks at the screen 16 through the lens array 18. Similarly, the texture R stores image information of the right view for the right eye of the viewer. The tracking system 20 keeps track of any movements of the viewer's head and signals these movements to the computer system which will then adapt the information displayed on the screen 16 to match the changed position of the viewer.

The screen 16 has a display section 22 for displaying user assistance information 24, as will be described in detail below.

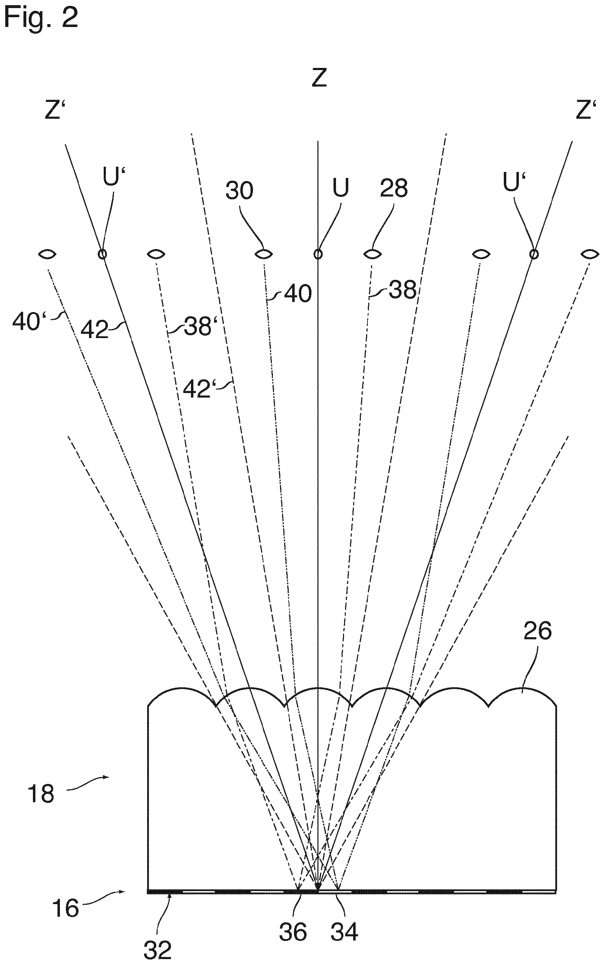

Fig. 2 is a schematic cross-sectional view of the screen 16 and the lens array 18. The flat screen 16 may for example be a TFT screen comprising a TFT layer. The lens array 18 is formed by a transparent plate having a plane back surface and a corrugated front surface defining an array of parallel cylindrical lenses 26. For simplicity, the lens array 18 has been shown here as solid block held in direct contact with the surface of the screen 16. In practice, the lens array may comprise different layers with different refraction indexes, possibly including a glue layer that bonds it to the surface of the screen. Conversely it may be separated from the screen by an air gap.

Fig. 2 also shows left and right eyes 28, 30 of a primary viewer who is represented here by a point that indicates a viewing position U of the viewer. The viewing position U is defined as the point at the centre of the line connecting the eyes 28 and 30 (or more precisely, their pupils' apexes). The screen 16 is shown with a channel mask 32 that divides the screen into a left channel 34 and a right channel 36. The left channel 34 contains image information to be displayed to the left eye 28 of the primary viewer, as has been symbolized by a light ray 38 shown in dot-dashed lines. Similarly, the right channel 36 contains image information to be displayed to the right eye 30 of the primary viewer, as has been symbolized by a light ray 40 shown in double-dot-dashed lines. The channels 34 and 36 take the form of alternating stripes which extend in the direction of the cylindrical lenses 26, and for each channel there is a one-to-one correspondence between the stripes and the cylindrical lenses.

It will be understood that, in practice, the distance between the viewing position U and the lens array 18 is much larger than has been shown in Fig. 2, and the light ray emerging from any stripe of the left channel 34 will be deflected by the cylindrical lenses 26 so as to hit the left eye 28 of the viewer, and the light ray emerging from any stripe of channel 36 will be deflected so as to hit the right eye 30 of the viewer. The image contents displayed in the left and right channels 34, 36 are such that the viewer at the viewing position U perceives a 3D image.

The viewing position U shown in Fig. 2 is an ideal viewing position in which normal projection of the viewing position onto the screen 16 corresponds to the center of the screen (in horizontal direction).

However, as has been illustrated by light rays 38' and 40' in Fig. 2, the plurality of cylindrical lenses 26 will deflect the light from each stripe of each of the channels 34, 38 into a plurality of different directions that are more or less inclined relative to the normal of the screen. Consequently, there are several secondary viewing positions U' from which a secondary viewer may watch the screen 16, and the left and right eyes of the secondary viewer would essentially see the same 3D image as the primary viewer. The image quality will only be slightly degraded by a distortion that is caused by the inclination of the direction along which light rays 42 propagate. Thus, the space in front of the monitor screen comprises a number of fan-shaped viewing zones Z, Z', from within which an acceptable 3D image can be perceived. The viewing position U lies in the center of the viewing zone Z, and the secondary viewing points U' lie each in the center of a secondary viewing zone Z'. In case the viewer has her eyes in two different viewing zones, the left eye would see the image that is intended for the right eye, and vice versa, so that the relation between far and near objects in the 3D-image would be inverted. The centers of the viewing zones Z and Z' have been marked by continuous lines 42, and the borders between the viewing zones have been marked by dashed lines 42'.

If a larger audience, consisting of the primary viewer and one or more secondary viewers wants to watch a 3D-image on the screen 16, the secondary viewers could use the secondary viewing positions U'. The tracking system 20 would track only the primary viewer, and if the primary viewer moves her head, the channel mask 32 would be shifted and resized accordingly, in order to optimize the 3D-image for the new viewing position of the primary viewer. Of course, this change of the channel mask 32 would degrade the images seen by the secondary viewers, and the secondary viewers would have to re-adjust their viewing positions as well, in order to adapt to the modified channel mask and the corresponding shift of the secondary viewing positions U'.

Although the channel mask 32 can be optimized only for the viewing position U of a single viewer (the primary viewer), as tracked by the tracking system 20, it is of course possible to use the tracking system 20 for tracking also the viewing positions of the secondary viewers. This information may then be utilized in the computer 10 for calculating the ideal viewing positions U' for these secondary viewers, and then the computer 10 may output user assistance information helping the secondary viewers to find their optimal viewing positions in relation to the current viewing position of the primary user.

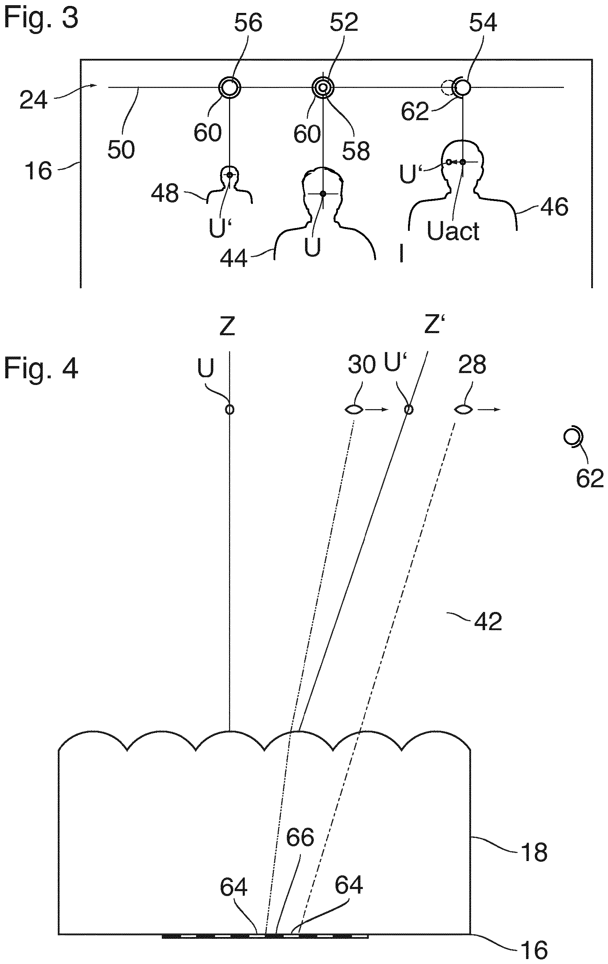

Fig. 3 shows a top portion of the screen 16 along with silhouettes of a primary viewer 44 and two secondary viewers 46, 48 whom the tracking system 20 has detected in front of the screen 16. The top portion of the screen 16 constitutes the display section 22 (Fig. 1) for displaying the user assistance information 24. In the example shown in Fig. 3, the user assistance information 24 is essentially constituted by a horizontal bar 50 with sliders 52, 54, 56 which represent the lateral positions of the viewers 44, 46 and 48.

The slider 52 associated with the primary viewer 44 is shown with an attribute 58 indicating that the associated viewer is the primary viewer 44. Further, a mark 60 in the form of a circle around the slider 52 indicates that the viewing position U of the primary viewer 44 is optimal for perceiving a high quality 3D image.

Such a mark 60 is also shown around the slider 56 that is assigned to the secondary viewer 48, indicating that this viewer is also in a relatively optimal horizontal viewing position, i.e. the secondary viewing position U'.

In case of the secondary viewer 46, however, it has been assumed here that her actual viewing position Uact differs from the optimal viewing position U' for that viewer. Consequently, the associated slider 54 is shown with a direction mark 62 on the side of the slider 54 to which the viewer 46 should move her head in order to approach the optimal viewing position. A target position for the slider 54 has been shown in phantom lines on the bar 50.

In this way, the user assistance information 24 helps the viewers to find their optimal viewing positions.

It will be understood that there are other possibilities to convey the user assistance information in an intuitive way. For example, the direction marks 62 may be formed by arrows, or the recommended movements of the sliders may be animated.

If the tracking system 20 has a stereo camera system or any other camera system being able to measure depth information, it is also capable of measuring the distance of each viewer from the screen 16. In case of the primary viewer 44, the scaling of the channel mask 32 may be adapted to the distance between the viewer and the screen. However, this is not possible at the same time for the secondary viewers 46 and 48. It is possible however, to output additional assistance information instructing the secondary viewers to change their distance to the screen. By way of example, this could be done by means of text messages or by animating the circular mark 60, e.g. by varying its size so as to simulate a zoom-in if the viewer is to approach the screen and a zoom-out if the viewer should retreat from the screen.

In the example shown in Fig. 3, it would also be useful if the meaning of the sliders 52, 54, 56 is conveyed to the viewers in an intuitive way. To some extent, this is achieved already by the fact that the positions of the sliders on the bar 50 will follow the lateral movements of the associated viewers, so that each viewer can find out which of the sliders is assigned to her. The sliders may also be distinguished further by showing them in different colors. At the start of a session or when a new secondary viewer is detected in front of the screen, the screen may briefly be switched to a 2D mode and show an image of the viewers as seen by the camera of the tracking system. Preferably, the image is mirrored at the vertical axis, so that the positions of the viewers in the image on the screen correspond to the positions of the silhouettes shown in Fig. 3. Then, the assignment of the sliders 52-56 to the viewers can be made transparent by positioning each slider above the corresponding image of the viewer.

In case that the tracking system temporarily loses track of one of the viewers, e.g. because the viewer turns away from the screen, this may also be made visible by modifying the appearance of the corresponding slider.

Optionally, the computer 10 may be programmed to designate the primary viewer automatically when more than one viewer is detected in front of the screen. For example, the viewer who was the first to be present in front of the screen may be designated as the primary viewer, the viewer with the smallest distance to the monitor may be designated as primary viewer, or the viewer that is detected to be closest to the center of the screen may be designated as primary viewer. Of course, the designation of the primary viewer may be changed actively by entering a suitable command, e.g. by pointing on the associated slider with a cursor. If the primary viewer 44 leaves the space in front of the screen or turns away from the screen for a longer period of time, the system may automatically designate a new primary viewer.

If the display section where the user assistance information 24 is displayed is also covered by the lens array 18, then the capability of the lens array to selectively obscure certain pixels on the screen dependent upon the viewing position can be utilized for conveying useful user assistance information even without having to track the actual positions of the secondary viewers 46, 48. This has been illustrated in Fig. 4 in a diagram that shows the lens array 18 as well as two viewing positions U and U', similarly as in Fig. 2. In this case, the screen 16 may be controlled to show (e.g. only in the display section 22) a two-dimensional image, so that there is no subdivision between a left channel and a right channel. If a secondary viewer is in the secondary viewing position U' in Fig. 4, which is an optimal viewing position for that viewer, the focus of the light rays 42 from both eyes 28, 30 to the screen 16 is on the boundary between two regions 64 and 66. Here, the screen 16 is controlled such that the secondary viewer does not see any image at all or, optionally, sees the mark 60 indicating that the viewer is in the optimal viewing position. Then, if the viewer moves to right in Fig. 4 (i.e. to the left from her own perspective), the focus of each of the two rays 42 will move into the region 64 where the viewer sees the direction mark 62 prompting her to move to the right (from her perspective), thereby to re-adjust to the viewing position U'. Conversely, if the viewer moves to the right from her perspective, the focus will move into the region 66 and the viewer will see a direction mark prompting her to move to the left. In this way, each auxiliary viewer will always be assisted in correcting her viewing position, at least as long as the deviation from the ideal position is not too large. Similarly, if the primary viewer changes the primary viewing position U, this will cause a shift of the regions 64 and 66 on the screen, and the secondary viewers will be prompted to adjust their viewing positions.

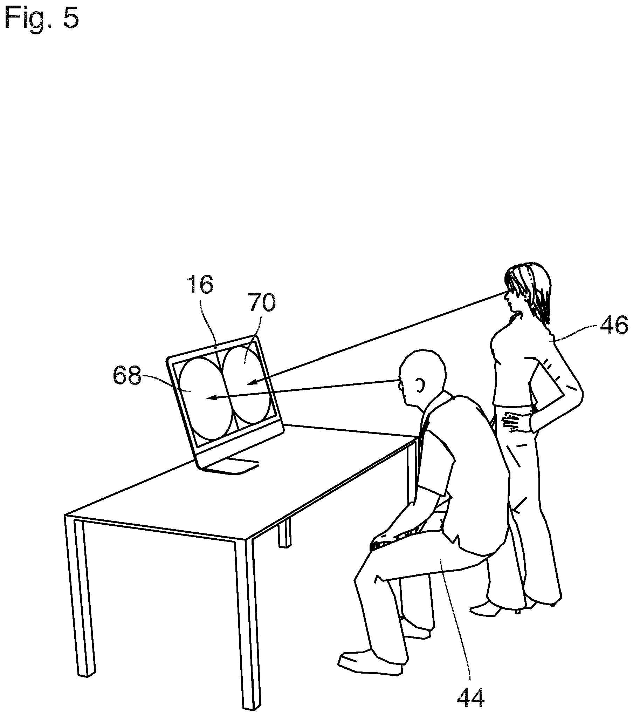

Another embodiment will now be described in conjunction with Figs. 5 to 8.

In this embodiment, as has been shown in Fig. 5, the screen 16 is split into a number of so-called viewports 68, 70, i.e. windows, in which different images can be displayed. In other respects, all the principles that have been described above can be employed in conjunction with this embodiment as well.

In the scenario shown in Fig. 5, a primary viewer 44 and a secondary viewer 46 are present in front of the screen 16. The viewport 68 shows a 3D-image that is optimized for the viewing distance and the horizontal position of the primary viewer 44. The viewport 70 shows the same 3D-image, but optimized for the viewing distance and horizontal position of the secondary viewer 46.

In the example shown, the viewports 68 and 70 are shaped as truncated circles and are therefore particularly suited for displaying images that have been captured with the camera system of a stereo-microscope or an endoscope, for example. The circles are truncated such that the relevant image information can be shown, but both viewports fit into the rectangular screen 16 which may have an aspect ratio of, for example: 16:9. Both viewers see the same 3D-image captured by the microscope or endoscope and can therefore exchange their opinions on what they see. On the other hand, it is also possible that the two viewers can control for example the zoom of their image independently of one another, and can also shift their images independently of one another, so that the two viewers may focus on different details of the image.

The tracking system 20 (which has not been shown in Fig. 5) will track the viewing positions of both viewers simultaneously and will adapt the channel masks for the two viewports accordingly.

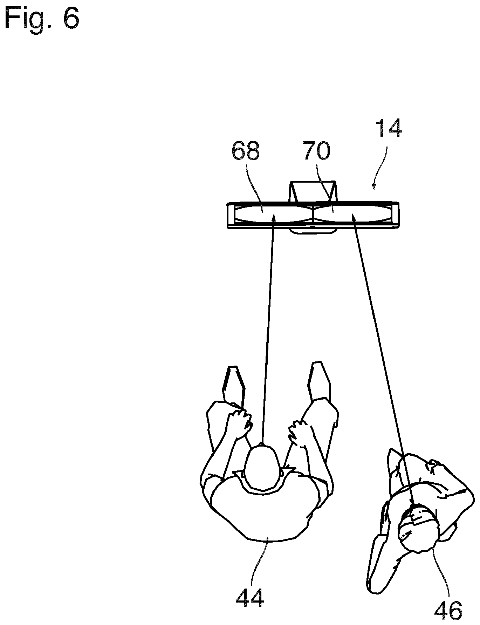

Fig. 6 shows the same scenario as Fig. 5 in a top plan view and illustrates more clearly that the viewing distances of the two viewers 44 and 46 may be different from one another.

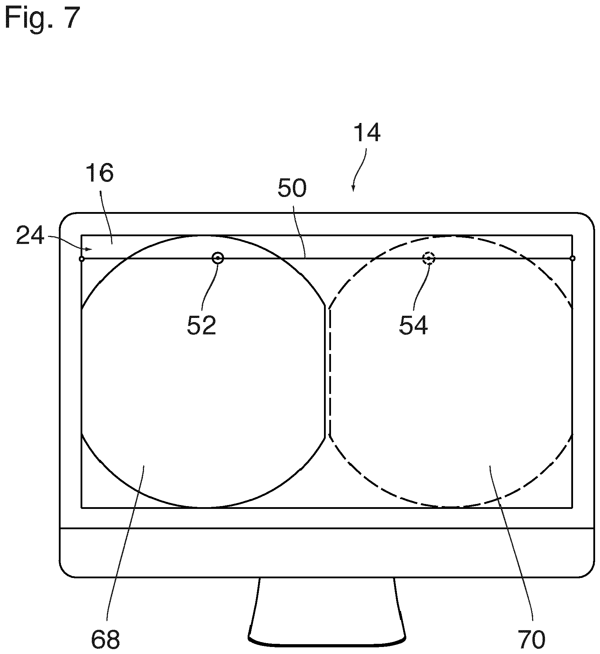

In this embodiment, user assistance information 24 may be employed for example for making transparent which viewport belongs to which viewer. Again, the user assistance information 24 may take the form of a bar 50 with sliders 52, 54 for each viewer, as has been shown in Fig. 7.

It shall be assumed here that, initially, the system operates in a single-viewer mode, with only the viewport 68 in the center of the screen 16. The slider 52 for the single viewer may also be shown, and a mark such as the mark 60 in Fig. 3 may provide feedback that the system is optimally adjusted to the current viewing position of the single viewer. Then, when a secondary viewer is detected in front of the screen and is detected to watch the screen, the image displayed on the screen 16 will change to what is shown in Fig. 7.

The viewport 68 shifts to one side of the screen and the viewport 70 pops up in the free space on the other side of the screen. Whether the new viewport 70 will appear on the right side or on the left side of the screen will depend upon where the secondary viewer is detected, which makes more transparent that the new viewport 70 is associated with the secondary viewer 46. Further, the slider 54 appears at a position on the bar 50 that corresponds to the viewing position of the secondary viewer. As before, the sliders 52, 54 may have different colors, and each viewport 68, 70 may have a frame in the same color, thereby emphasising the correspondence between the sliders and the viewports.

If yet another secondary viewer enters the scene, it may depend upon the settings of the system or upon commands input by, e.g. a primary viewer, whether the screen is split into three viewports or whether the two secondary viewers are to share the same viewport, following the principles explained in conjunction with Figs. 1 to 4.

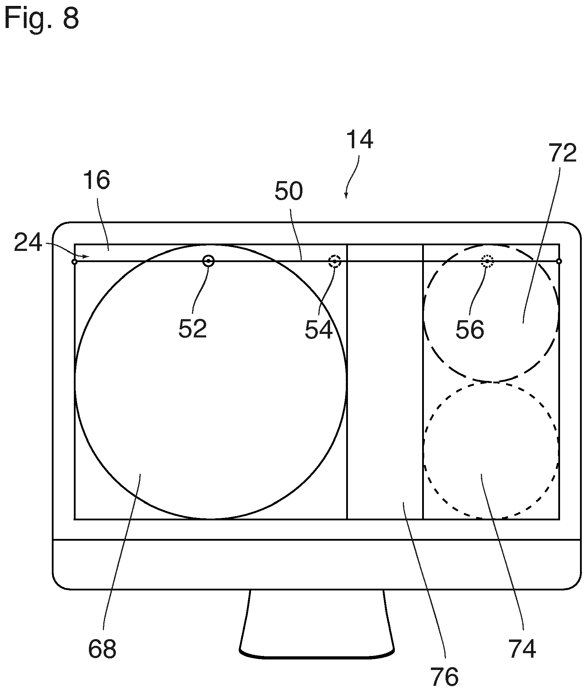

It is observed that the screen 16 may also be split into a combination of 3D viewports and 2D viewports. An example has been illustrated in Fig. 8, where a large circular 3D viewport 68 has been combined with two smaller circular 3D viewports 72 and 74 and a rectangular 2D viewport 76. The correspondence between the sliders 52, 54 and 56 and the 3D viewports 68, 72 and 74 is again made transparent by colors or other frame-features of the sliders and the viewports.

The layout shown in Fig. 8 is useful, for example, for a scenario where a primary viewer 44 is in charge of the operations and needs a full and uncompromised view of the 3D scene whereas the secondary viewers can see the same 3D content on the smaller viewports 72, 74, and additional shared information may be displayed on the 2D viewport 76.

## Claims

1. An autostereoscopic display device comprising:
- a monitor (14) having a parallax barrier (18);
- a tracking system (20) arranged to track a viewing position (U) of a primary viewer (44); and
- a computer (10) configured to control the monitor (14) to display a stereoscopic image that is optimized for the viewing position (U) of the primary viewer (44),
**characterized in that** the computer (10) is configured for calculating, on the basis of data provided by the tracking system (20), user assistance information (24) for a secondary viewer (46) and for outputting this information, said user assistance information (24) proposing actions to be taken by the secondary viewer (46) in order to see a 3D-image on the monitor (14).

2. The device according to claim 1, wherein the computer (10) is configured to output the user assistance information (24) in the form of spoken or written text.

3. The device according to claim 1 or 2, wherein the computer (10) is configured to output the user assistance information (24) in graphic form on a display section (22) of the monitor (14).

4. The device according to any of the preceding claims, wherein the user assistance information (24) comprises information instructing the secondary viewer (46) to move to a target position that the computer (10) has calculated on the basis of tracking data for the primary viewer (44).

5. The device according to any of the preceding claims, wherein the tracking system (20) is arranged to track also a viewing position (U') of the secondary viewer (46).

6. The device according to claim 5, wherein the user assistance information (24) displayed on the display section (22) comprises a slider (54, 56) shown on a horizontal bar (50) in a position that represents an actual lateral position of the secondary viewer (46).

7. The device according to claim 6, wherein the user assistance information displayed on the display section (22) comprises a slider (52) shown in a position that represents an actual lateral position of the primary viewer (44).

8. The device according to any of the preceding claims, wherein the computer (10) is configured to control the monitor (14) in a multi-viewer mode in which a screen(16) of the monitor (14) is split into a plurality of viewports (68, 70), said viewports showing 3D-images that are optimized for viewing positions of different viewers, and the user assistance information (24) comprises information instructing each viewer to pay attention to the viewport (68 or 70) in which the image is optimized for the viewing position of the respective viewer.

9. The device according to claim 8, wherein the computer (10) is configured to control the monitor (14) to show identical 3D images in the plurality of viewports (68, 70).

10. The device according to any of the preceding claims, wherein the tracking system (20) is arranged to automatically detect a viewer who is present in front of the monitor (14) and watches the monitor screen.

11. The device according to claim 10, wherein the tracking system (20) is configured to designate one of the detected viewers as the primary viewer (44).
